# DEMANDE DE BREVET EUROPEEN

(11) **EP 0 784 964 A2**
(43) Date de publication de la demande: **23.07.1997**
(21) Numéro de dépôt: 96440112.9
(22) Date de dépôt: 16.12.1996
(51) Int. Cl.: A61C 11/08

(54) **Dispositif pour le positionnement de modèles de moulage des maxillaires supérieur et inférieur sur un articulateur**

(30) Priorité: 22.01.1996 FR 9600827
(71) Demandeur: Le Jan, Jacques, 35400 Saint-Malo (FR)
(72) Inventeur: Le Jan, Jacques, 35400 Saint-Malo (FR)
(74) Mandataire: Arbousse-Bastide, Jean-Claude Philippe

(57) **Abrégé**

Dispositif de positionnement de modèles de moulage des maxillaires supérieur et inférieur sur un articulateur, permettant de simuler les déplacements osseux et les déplacements alvéolo-dentaires à réaliser lors des ostéotomies maxillaire et mandibulaire.

Il comprend une plaquette magnétique (1) dont l'assiette est réglable à l'aide de quatre tiges (3) solidarisées à l'une des faces (11) de ladite plaquette (1) par l'intermédiaire de rotules (4) assurant la mobilité angulaire desdites tiges (3), lesquelles sont aptes à coulisser dans un support (7) solidarisé sur l'articulateur et à être bloquées à la hauteur désirée par des moyens de blocage (8); et il comprend en outre au moins une plaque en acier (5) munie de moyens (50) lui permettant de supporter un modèle maxillaire ou mandibullaire (9) sur une de ses faces et susceptible d'être solidarisée par son autre face à ladite plaquette magnétique (1).

Le dispositif trouve son utilisation dans le domaine de l'orthopédie et notamment de l'orthopédie maxillo-faciale.

## Description

La présente invention a pour objet, dans le domaine de l'orthopédie et notamment de l'orthopédie maxillo-faciale, un dispositif permettant le positionnement de modèles de moulage maxillaire et mandibulaire sur un articulateur permettant de simuler les déplacements osseux et les déplacements alvéolo-dentaires à réaliser lors des ostéotomies maxillaires et mandibullaires, tout en conservant la relation crânio-mandibullaire de référence.

Les articulateurs mis en oeuvre dans la chirurgie maxillo-faciale ont pour fonction principale de reproduire le fonctionnement de l'articulation tempo-mandibulaire et sont couramment utilisés pour la mise au point et la fabrication de prothèses.

Parmi les principaux types d'articulateurs connus à ce jour, les articulateurs semi-adaptables permettent de monter les modèles en fonction de plans de référence, et peuvent être programmés.

Ces articulateurs comportent généralement un bras inférieur formant la base de l'articulateur, destiné à supporter le modèle maxillaire et un bras supérieur articulé sur ladite base, destiné à porter le modèle mandibulaire.

Pour mettre en oeuvre les articulateurs semi-adaptables, il convient de réaliser en premier lieu les modèles de moulage maxillaire et mandibulaire et de déterminer les paramètres et plans de référence qui permettront de positionner lesdits modèles sur l'articulateur en fonction de chaque cas:
- le montage du modèle maxillaire s'effectue en fonction d'un plan de référence appelé plan axio-orbitaire. Pour cela un arc facial muni d'embouts auriculaires est placé dans les conduits auditifs externes du patient alors que la partie antérieure dudit arc est maintenue par un appui sur l'ensellure nasale, ce qui le positionne par rapport à la partie inférieure de l'orbite. Une fourchette garnie d'un matériau à empreinte est ensuite appliquée sur les dents maxillaires et solidarisée à l'arc facial, puis l'ensemble arc facial-fourchette est solidarisé au bras inférieur de l'articulateur, le modèle maxillaire placé sur la fourchette étant ainsi solidarisé selon le plan de référence axio-orbitaire donné par l'arc facial ;
- le montage du modèle mandibulaire s'effectue en fonction d'un moulage d'enregistrement en cire, pris sur le patient, et des rapports des deux arcades dentaires en occlusion de relation centrée.

La solidarisation et le positionnement définitif des modèles maxillaire et mandibullaire sont réalisés suivant les paramètres définis précédemment au moyen de plâtre à prise rapide déposé entre le modèle et le support de montage vissé sur le bras supérieur ou le bras inférieur du montage.

Toutefois ce procédé, et les moyens mis en oeuvre, ne permettent pas une simulation facile, fiable et reproductible des déplacements des arcades dentaires en raison principalement du fait qu'il est nécessaire de casser et de scier les socles en plâtres pour les repositionner différemment. Ces déplacements sont, dans ces conditions, difficilement quantifiables et ne peuvent être reproduits sans retravailler le plâtre.

La présente invention a pour but de remédier à ces inconvénients en proposant un dispositif de positionnement des modèles de moulage permettant, tout en conservant le plan de référence, de les orienter et de les déplacer facilement dans les trois dimensions de l'espace.

Le dispositif selon l'invention se caractérise essentiellement en ce qu'il comprend une plaquette magnétique dont l'assiette est réglable à l'aide de quatre tiges solidarisées à l'une de ses faces par l'intermédiaire de rotules assurant la mobilité angulaire desdites tiges, lesquelles sont aptes à coulisser dans un support fixé sur le bras supérieur ou le bras inférieur de l'articulateur et à être bloquées à la hauteur désirée par des moyens de blocage; et en ce qu'il comprend en outre au moins une plaque en acier munie de moyens lui permettant de supporter un modèle maxillaire ou mandibullaire sur une de ses faces et susceptible d'être solidarisée par son autre face à ladite plaquette magnétique.

Dans un mode de réalisation préférentiel de l'invention le support est une plaque sensiblement rectangulaire dans laquelle sont pratiqués quatre perçages dans lesquels peuvent coulisser les tiges solidarisées à la plaquette magnétique.

Selon une caractéristique aditionnelle du dispositif selon l'invention les moyens de blocage des tiges solidarisées à la plaquette magnétique sont des vis de serrage disposées chacune dans un trou percé dans un des côtés du support de manière à déboucher dans un des perçages pratiqués dans ledit support.

Selon une autre caractéristique aditionnelle du dispositif selon l'invention les tiges solidarisées à l'une des faces de la plaquette magnétique comportent des graduations.

Selon une autre caractéristique aditionnelle de l'invention deux règles graduées sont fixées sur deux bords adjacents de la plaquette magnétique de manière à permettre la mesure des déplacements de la plaque en acier dans un plan parallèle à celui de ladite plaquette.

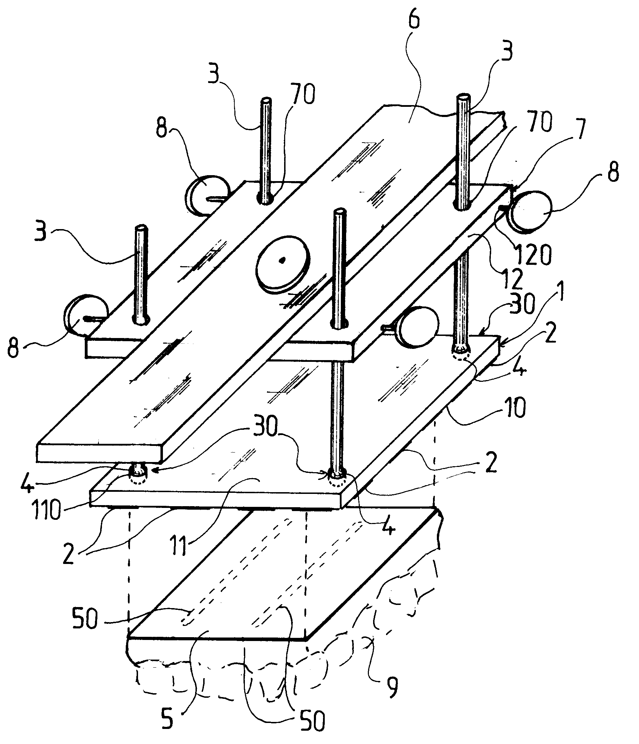

Les avantages et les caractéristiques de la présente invention ressortiront plus clairement de la description qui suit et qui se rapporte au dessin annexé, étant entendu que cette description ne présente aucun caractère limitatif vis à vis de l'invention.

La figure unique du dessin annexé représente une vue en perspective du dispositif selon l'invention.

On peut voir sur cette figure que le dispositif selon l'invention comprend une plaquette 1 de forme rectangulaire dont la face inférieure 10 comporte une pluralité d'aimants 2, alors qu'à sa face supérieure 11 sont solidarisées quatre tiges 3 par l'une de leurs extrémités 30 munie d'une rotule 4, insérée dans un évidement approprié 110 pratiqué aux quatre coins de la plaquette 1, assurant la mobilité angulaire des tiges 3.

Une plaque 5, réalisée de préférence en acier doux, comprend sur une de ses faces des tiges de rétention 50 permettant de maintenir correctement le modèle du maxillaire supérieur ou inférieur sur la plaque 5, qui est destinée à être appliquée contre la face inférieure 10 de la plaquette 1 et maintenue contre celle-ci, dans la position désirée par l'utilisateur, à l'aide des aimants 2.

On peut voir également qu'une plaque-support 7 comportant quatre perçages 70 pratiqués dans ses quatre coins, est fixée sur le bras 6 d'un articulateur de manière que l'on puisse faire coulisser les tiges 3 dans les perçages 70 de chaque coté du bras 6 de l'articulateur. En outre quatre vis de serrage 8 disposées chacune dans un trou 120, percé dans deux cotés opposés 12 de la plaque 7 de manière à déboucher perpendiculairement dans chaque perçage 70, permettent de bloquer en position les tiges 3 dans la plaque-support 7 suivant les paramètres d'orientation à donner au modèle 9 à positionner.

Afin de pouvoir effectuer des réglages précis et notamment millimétriques les tiges 3 solidarisées à l'une des faces de la plaquette magnétique 1 peuvent avantageusement comporter des graduations. Deux règles graduées peuvent également être fixées sur deux bords adjacents de la plaquette magnétique 1 de manière à mesurer les déplacements de la plaque en acier 5 en translation latérale et en profondeur dans un plan parallèle à celui de la plaquette 1.

Le dispositif de positionnement selon l'invention remplace le bloc de plâtre et son support, utilisés actuellement, et permet le déplacement aisé d'un modèle 9, en translation latérale ou sagittale et en rotation autour de son axe grâce à la plaque d'acier 5, en translation verticale grâce aux tiges 3 ainsi qu'en inclinaison par réglage de l'assiette de la plaque 1.

## Revendications

1. Dispositif pour le positionnement de modèles de moulage des maxillaires supérieur et inférieur sur un articulateur, permettant de simuler les déplacements osseux et les déplacements alvéolo-dentaires à réaliser lors des ostéotomies maxillaire et mandibullaire tout en conservant la relation crânio-mandibullaire de référence, caractérisé en ce qu'il comprend une plaquette magnétique (1) dont l'assiette est réglable à l'aide de quatre tiges (3) solidarisées à l'une des faces (11) de ladite plaquette (1) par l'intermédiaire de rotules (4) assurant la mobilité angulaire desdites tiges (3), lesquelles sont aptes à coulisser dans un support (7) fixé sur l'articulateur et à être bloquées à la hauteur désirée par des moyens de blocage (8); et en ce qu'il comprend en outre au moins une plaque en acier (5) munie de moyens (50) lui permettant de supporter un modèle maxillaire ou mandibullaire (9) sur une de ses faces et susceptible d'être solidarisée par son autre face à ladite plaquette magnétique (1).

2. Dispositif selon la revendication 1 caractérisé en ce que le support (7) est une plaque sensiblement rectangulaire dans laquelle sont pratiqués quatre perçages (70) dans lesquels peuvent coulisser les tiges (3) solidarisées à la plaquette magnétique (1).

3. Dispositif selon la revendication 2 caractérisé en ce que les moyens de blocage (8) des tiges (3) sont des vis de serrage disposées chacune dans un trou (120) percé dans un des côtés (12) du support (7) de manière à déboucher dans un des perçages (70) pratiqués dans ledit support (7).

4. Dispositif selon l'une quelconque des revendications précédentes caractérisé en ce que les tiges (3) comportent des graduations.

5. Dispositif selon l'une quelconque des revendications précédentes caractérisé en ce que deux règles graduées sont fixées sur deux bords adjacents de la plaquette magnétique (1) de manière à permettre la mesure des déplacements de la plaque en acier (5) dans un plan parallèle à celui de ladite plaquette (1).
